(19) Europäisches Patentamt
European Patent Office
Office européen des brevets

(11) **EP 2 456 136 A1**

(12) **DEMANDE DE BREVET EUROPEEN**

(43) Date de publication:
**23.05.2012 Bulletin 2012/21**

(51) Int Cl.:
***H04L 12/56*** *(2006.01)*

(21) Numéro de dépôt: **10306268.3**

(22) Date de dépôt: **17.11.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Thomson Licensing**
**92130 Issy-les-Moulineaux (FR)**

(72) Inventeurs:
• **Bichot, Guillaume**
  **35576, Cesson Sevigne cedex (FR)**
• **Gouache, Stephane**
  **35576, Cesson Sevigne cedex (FR)**

(74) Mandataire: **Ruellan-Lemonnier, Brigitte**
**Technicolor**
**European Patent Operations**
**1-5 Rue Jeanne d'Arc**
**92443 Issy-les-Moulineaux Cedex (FR)**

(54) **Dispositif et procédé de détermination de chemin(s) de communication entre un équipement ayant plusieurs interfaces de communication et un autre équipement ayant au moins une interface de communication**

(57)    Un procédé est dédié à la détermination de chemin(s) de communication pour des paquets d'une session de communication exploitant au moins deux chemins de communication établis entre deux équipements de communication (E1, E2), un premier de ces équipements (E1) ayant au moins une interface de communication ($I_{11}$) disposant d'une adresse de communication et un second de ces équipements (E2) ayant au moins deux interfaces de communication ($I_{21}$ et $I_{22}$) disposant d'adresses de communication différentes. Ce procédé comprend une étape consistant à sélectionner au moins un chemin de communication existant entre une interface de communication ($I_{11}$) du premier équipement de communication (E1) et une interface de communication ($I_{21}$) du second équipement de communication (E2), en fonction au moins d'une bande passante maximale atteignable en réception pour cette première interface ($I_{11}$) et des bandes passantes utilisables sur les chemins de communication existants, en vue de la transmission de paquets de la session de communication du second équipement (E2) vers le premier équipement (E1).

Figure unique

EP 2 456 136 A1

**Description**

Domaine technique de l'invention

L'invention concerne les transmissions de paquets de données entre des équipements de communication qui comprennent, pour certains, au moins une interface de communication propre à se connecter à un réseau d'accès, et pour d'autres, au moins deux interfaces de communication disposant d'adresses de communication différentes et propres à se connecter à des réseaux d'accès différents afin de pouvoir éventuellement transmettre dans un mode dit "à chemins de communication multiples" (ou "multipath").

On entend ici par "chemin de communication" un trajet reliant deux équipements de communication au travers de deux interfaces de communication (une par équipement) définies chacune par une adresse de communication (par exemple une adresse IP). Un chemin de communication est donc identifié par la paire d'adresses de communication de deux interfaces de communication.

Par ailleurs, on entend ici par "équipement de communication" tout type d'équipement comprenant au moins une interface de communication, filaire ou non filaire, et capable d'échanger des paquets de données avec un autre équipement de communication, éventuellement d'un type différent. Par conséquent, il pourra par exemple s'agir d'un téléphone fixe ou mobile, éventuellement de type intelligent (ou "smartphone"), d'un ordinateur fixe ou portable, d'un assistant personnel numérique (ou PDA, y compris un "pocket PC"), d'un récepteur de contenus (comme par exemple un décodeur, une passerelle résidentielle (ou "residential gateway") ou un STB ("Set-Top Box")), ou d'un équipement de réseau (comme par exemple un serveur de contenus).

Etat de l'art

Comme le sait l'homme de l'art, lorsqu'un premier équipement (de communication) dispose d'au moins deux interfaces de communication qui peuvent se connecter à des réseaux d'accès différents, il est mesure d'échanger des données, dans le cadre d'une session de communication, et suivant au moins deux chemins de communication différents, avec un second équipement (de communication) disposant d'au moins une interface de communication pouvant se connecter à un réseau d'accès. Dans ce cas, la session de communication peut être de type dit à chemins de communication multiples (ou multipath ou encore multi-chemins). Le premier équipement doit alors mettre en oeuvre une stratégie de transmission de paquets afin de sélectionner un ou plusieurs chemins de communication en fonction des besoins de l'application concernée (et notamment du type de données qu'elle utilise ou produit) et des caractéristiques et statuts respectifs des chemins de communication qui existent entre lui et le second équipement. Ces caractéristiques et statuts doivent être compatibles avec les états en cours des différents réseaux d'accès qui sont empruntés par les chemins de communication, et sont mis à jour régulièrement grâce à des mesures.

A titre d'exemple non limitatif, lorsque la session de communication concerne une application de distribution de vidéo, chaque chemin de communication peut être caractérisé par des paramètres tels que la bande passante (ou "bandwidth" - parfois appelée "débit binaire" - en fait il s'agit d'appellations équivalentes ayant une même unité, à savoir un nombre de bits par unité de temps), la gigue paquet, le temps de transmission des paquets (ou "delay"). Ces paramètres peuvent être mesurés (ou estimés) grâce à diverses techniques dites de bout-en-bout (ou "end-to-end") qui ne sont généralement pas triviales du fait qu'elles se doivent d'être non intrusives (c'est-à-dire non perturbatrices). Par exemple, lorsque le protocole de transport est de type TCP ("Transmission Control Protocol") ou SCTP ("Stream Control Transmission Protocol" - défini notamment dans les règles RFC 4960 et 5061 de l'IETF), on peut utiliser un algorithme de type Westwood pour mesurer de façon continue la bande passante disponible sur un chemin de communication grâce aux accusés de réception dupliqués des paquets transmis et aux intervalles de temps d'arrivée des paquets.

Cependant, même si la stratégie de transmission de paquets d'un premier équipement à interfaces de communication multiples, pendant une session de communication, utilise des valeurs de paramètres assez précis et des informations locales personnelles (comme par exemple le coût d'utilisation d'une interface lié au coût d'utilisation de son réseau d'accès), elle ne prend pas en compte l'une au moins des informations locales qui sont propres au second équipement (ou point final) qui participe à cette session de communication, à savoir la bande passante maximale qu'il est prêt à supporter en réception. Or, la connaissance d'au moins cette information locale du second équipement pourrait avantageusement influencer le premier équipement lors de sa sélection de chemin(s) de communication.

On notera que, lorsque le second équipement dispose de plusieurs interfaces de communication, certaines autres de ses informations locales personnelles pourraient être également utiles au premier équipement lors de sa sélection de chemin(s) de communication. C'est par exemple le cas du coût d'utilisation de chaque interface lié au coût d'utilisation de son réseau d'accès, la possibilité de contrôler la qualité de service (ou QoS) sur une interface de communication, et la consommation d'énergie pour une bande passante donnée (elle peut en effet varier d'une interface de communication à l'autre en fonction du lieu considéré et/ou de l'horaire).

Résumé de l'invention

L'invention a donc pour but d'améliorer la situation, et plus précisément de permettre une stratégie de transmission de paquets prenant en compte certaines informations locales connues des équipements (points intermédiaires ou points finaux) qui participent à des sessions de communication.

A cet effet, l'invention propose notamment un premier procédé, dédié à la transmission d'informations entre deux équipements de communication dans le cadre d'une session de communication exploitant au moins deux chemins de communication, l'un de ces équipements ayant au moins deux interfaces de communication disposant d'adresses de communication différentes, et l'autre ayant au moins une interface de communication disposant d'une adresse de communication, et comprenant :

- une étape (i) consistant à générer dans l'un au moins des équipements de communication un message de contrôle contenant chaque adresse de communication de chacune de ses interfaces de communication, associée à au moins une première information représentative d'une bande passante maximale atteignable en réception, et
- une étape (ii) consistant à transmettre ce message de contrôle à l'autre équipement de communication afin qu'il détermine au moins un chemin de communication pour transmettre des paquets de la session de communication entre l'une de ses interfaces de communication et une interface de communication de l'équipement de communication qui a transmis le message de contrôle, en fonction au moins de la première information correspondante contenue dans ce message de contrôle.

On entend ici par "bande passante maximale atteignable", la bande passante maximale qu'un équipement peut supporter en réception sur une interface donnée.

Le premier procédé selon l'invention peut comporter d'autres caractéristiques qui peuvent être prises séparément ou en combinaison, et notamment :

- à l'étape (i) le message de contrôle généré peut également contenir, pour chaque interface de communication, une seconde information qui est représentative d'un niveau de priorité d'utilisation de cette interface de communication;
- la bande passante maximale atteignable en réception au niveau d'une interface peut être égale à la valeur moyenne de la bande passante qui est utilisable en réception au niveau de cette interface, pour la session de communication considérée;
- chaque message de contrôle peut être conforme au protocole de transport SCTP ("Stream Control Transmission Protocol").

L'invention propose également un second procédé, dédié à la détermination de chemin(s) de communication pour des paquets d'une session de communication exploitant au moins deux chemins de communication établis entre deux équipements de communication, un premier de ces équipements ayant au moins une interface de communication disposant d'une adresse de communication et un second de ces équipements ayant au moins deux interfaces de communication disposant d'adresses de communication différentes. Ce second procédé comprend une étape consistant à sélectionner, au moins un chemin de communication qui existe entre une interface de communication du premier équipement de communication et une interface de communication du second équipement de communication, en fonction au moins d'une bande passante maximale atteignable en réception pour cette première interface et des bandes passantes utilisables sur les chemins de communication existants, en vue de la transmission de paquets de la session de communication du second équipement vers le premier équipement.

Le second procédé selon l'invention peut comporter d'autres caractéristiques qui peuvent être prises séparément ou en combinaison, et notamment :

- lorsque le premier équipement de communication comprend au moins deux interfaces de communication disposant d'adresses de communication différentes, on peut sélectionner l'une de ces interfaces de communication pour qu'elle constitue une extrémité du chemin de communication sélectionné, en fonction de niveaux de priorité d'utilisation qui leurs sont associés;

➢ on peut effectuer la sélection parmi les interfaces de communication du premier équipement de communication qui sont associées à une bande passante maximale atteignable en réception qui est supérieure à la bande passante des paquets de la session de communication qui doivent être transmis;

- lorsque la bande passante (effectivement) utilisable sur le chemin de communication sélectionné est strictement inférieure à la bande passante maximale atteignable en réception pour l'interface de communication du premier équipement de communication qui constitue une extrémité de ce chemin de communication sélectionné, on peut sélectionner au moins un autre chemin de communication qui existe entre une autre des interfaces de communication du second équipement de communication et cette interface de communication du premier équipement de communication, de sorte que des paquets de la session de communication soient transmis sur chaque chemin de communication sélectionné.

L'invention propose également un premier dispositif, dédié à la génération de messages de contrôle pour une session de communication entre deux équipements de communication, l'un d'entre eux ayant au moins deux interfaces de communication disposant d'adresses de communication différentes, et l'autre ayant au moins une interface de communication disposant d'une adresse de communication, et agencé pour générer pour l'un des équipements de communication un message de contrôle qui contient chaque adresse de communication de chacune de ses interfaces de communication associée à au moins une première information représentative d'une bande passante maximale atteignable en réception, et qui est destiné à l'autre équipement de communication.

Le premier dispositif selon l'invention peut comporter d'autres caractéristiques qui peuvent être prises séparément ou en combinaison, et notamment :

- il peut être agencé pour générer un message de contrôle qui contient également, pour chaque interface de communication, une seconde information qui est représentative d'un niveau de priorité d'utilisation de l'interface de communication;

- il peut être agencé pour introduire dans le message de contrôle une bande passante maximale atteignable en réception au niveau d'une interface qui est égale à la valeur moyenne de la bande passante qui est (effectivement) utilisable en réception au niveau de cette interface, pour la session de communication considérée;

- il peut être agencé pour générer des messages de contrôle qui sont conformes au protocole de transport SCTP.

L'invention propose également un second dispositif, dédié à la détermination de chemin(s) de communication de paquets d'une session de communication entre deux équipements de communication, un premier d'entre eux ayant au moins une interface de communication disposant d'une adresse de communication et un second d'entre eux ayant au moins deux interfaces de communication disposant d'adresses de communication différentes.

Ce second dispositif se caractérise par le fait qu'il comprend des premiers moyens de sélection agencés pour sélectionner au moins un chemin de communication qui existe entre une interface de communication du premier équipement de communication et une interface de communication du second équipement de communication, en fonction au moins d'une bande passante maximale atteignable en réception pour cette première interface et des bandes passantes utilisables sur les chemins de communication existants, en vue de la transmission de paquets de la session de communication du second équipement vers le premier équipement.

Par ailleurs, les premiers moyens de sélection de ce second dispositif peuvent être en outre agencés, lorsque le premier équipement de communication comprend au moins deux interfaces de communication disposant d'adresses de communication différentes, pour sélectionner l'une de ces interfaces de communication pour qu'elle constitue une extrémité du chemin de communication sélectionné, en fonction de niveaux de priorité d'utilisation qui leur sont associés.

L'invention propose également un équipement de communication comprenant, d'une part, au moins une interface de communication disposant d'une adresse de communication, et, d'autre part, un dispositif de génération de messages de contrôle du type de celui présenté ci-avant et/ou un dispositif de détermination de chemin (s) de communication du type de celui présenté ci-avant.

Brève description des dessins

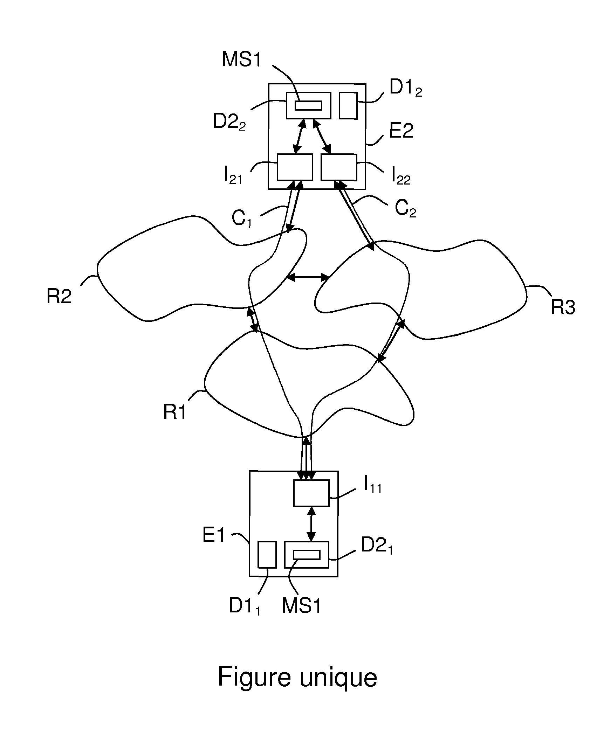

D'autres caractéristiques et avantages de l'invention apparaîtront à l'examen de la description détaillée ci-après, et du dessin annexé, sur lequel l'unique figure illustre de façon schématique et fonctionnelle deux équipements de communication équipés chacun d'un dispositif de génération de messages de contrôle selon l'invention et d'un dispositif de détermination de chemin (s) de communication selon l'invention, et l'un de ses équipements de communication disposant d'une unique interface de communication propre à se connecter à un réseau d'accès alors que l'autre équipement de communication dispose de deux interfaces de communication propres à se connecter respectivement à deux réseaux d'accès différents.

Le dessin annexé pourra non seulement servir à compléter l'invention, mais aussi contribuer à sa définition, le cas échéant.

Description détaillée

L'invention a pour objet de permettre la prise en compte de certaines informations locales, connues des équipements de communication (points intermédiaires ou points finaux) Ej qui participent à des sessions de communication, lors de la sélection de chemins de communication.

Dans ce qui suit, on considère à titre d'exemple non limitatif que les équipements de communication Ej sont des ordinateurs fixes ou des serveurs de contenus. Mais, l'invention n'est pas limitée à ces types d'équipement de communication. Elle concerne en effet tout type d'équipement Ej comprenant au moins une interface de communication $I_{ji}$, filaire ou non filaire, et capable d'échanger des paquets de données avec un autre équipement de communication Ej' (j' ≠ j), éventuellement d'un type différent. Par conséquent, il pourra également s'agir, par exemple, d'un téléphone fixe ou mobile, d'un ordinateur portable, d'un assistant personnel numérique (ou PDA, y compris un pocket PC), d'un récepteur de contenus (comme par exemple un décodeur, une passerelle résidentielle ou un STB (Set-Top Box)), ou d'un autre équipement de réseau impliqué dans la transmission de paquets de données.

On a schématiquement illustré sur l'unique figure un exemple non limitatif de couplage entre deux équipements (de communication) Ej (j = 1 ou 2).

Le premier équipement E1 (j = 1) comprend, dans cet exemple non limitatif, une unique interface de communication $I_{11}$ capable de se connecter à un premier réseau d'accès R1, par exemple de type ADSL. Ce premier équipement E1 est par exemple un ordinateur fixe.

Le second équipement E2 (j = 2) comprend, dans cet exemple non limitatif, deux interfaces de communication $I_{2i}$. La première interface de communication $I_{21}$ (i = 1) est capable de se connecter à un deuxième réseau d'accès R2, par exemple de type ADSL (éventuellement identique à R1). La seconde interface de communication $I_{22}$ (i = 2) est capable de se connecter à un troisième réseau d'accès R3, par exemple de type WiFi, et couplé aux premier R1 et deuxième R2 réseaux d'accès. Ce second équipement E2 est par exemple un serveur de contenus (comme par exemple des vidéos).

Par ailleurs, dans l'exemple non limitatif illustré, un premier chemin de communication de paquets $C_1$ (m = 1) peut être établi entre l'unique interface (de communication) $I_{11}$ du premier équipement E1 et la première interface (de communication) $I_{21}$ du second équipement via le premier réseau d'accès R1 et le deuxième réseau d'accès R2, et un second chemin de communication de paquets $C_2$ (m = 2) peut être établi entre l'unique interface (de communication) $I_{11}$ du premier équipement E1 et la deuxième interface $I_{22}$ du second équipement E2 via le premier réseau d'accès R1 et le troisième réseau d'accès R3.

Afin que les équipements Ej puissent connaître certaines informations locales des équipements Ej' avec lesquels ils veulent établir ou ont établi des sessions de communication, l'invention propose de mettre en oeuvre un premier procédé de transmission d'informations entre équipements Ej.

Ce premier procédé comprend deux étapes (i) et (ii).

Une première étape (i) consiste à générer dans l'un au moins des équipements Ej un message de contrôle qui contient chaque adresse de communication de chacune de ses interfaces (de communication) $I_{ji}$, associée à au moins une première information qui est représentative d'une bande passante maximale atteignable (et donc qui peut être atteinte au mieux) en réception $K_{ji}$.

La bande passante maximale (ou débit binaire maximal) atteignable(e) en réception $K_{ji}$ au niveau d'une interface $I_{ji}$ d'un équipement donné Ej peut, par exemple, être égale à la valeur moyenne de la bande passante qui est (effectivement) utilisable en réception au niveau de cette interface $I_{ji}$, pour la session de communication considérée. Par exemple, la bande passante totale du lien ADSL entre le premier équipement E1 et le premier réseau d'accès R1 peut être égale à 8 Mbps et la valeur moyenne de la bande passante qui est utilisable en réception au niveau de son interface $I_{11}$ pour une session de communication de type téléchargement de vidéos auprès du second équipement E2 peut être égale à 2,5 Mbps. Dans ce cas, la bande passante maximale atteignable en réception $K_{11}$ au niveau de l'interface $I_{11}$ peut être égale à 2, 5 Mbps.

On notera que lorsqu'une interface $I_{j'i}$ d'un équipement Ej' constitue l'extrémité de plusieurs (au moins deux) chemins de communication $C_m$ dont les extrémités opposées sont constituées par l'une au moins des interfaces $I_{ji}$ d'un autre équipement Ej (j ≠ j'), comme c'est les cas de l'unique interface $I_{11}$ du premier équipement E1, sa bande passante maximale (ou débit binaire maximal) atteignable(e) en réception $K_{j'i}$ peut être considérée comme la somme des bandes passantes maximales atteignables en réception $k_m$ au niveau de cette interface $I_{j'i}$ pour les différents chemins de communication $C_m$ précités, pour la session de communication considérée (soit

$$K_{j'i} = \sum_{m(j',i)} k_m ).$$

Par exemple, dans l'exemple illustré $K_{11} = k_1 + k_2$.

On notera également que, lorsqu'un équipement Ej comprend plusieurs (au moins deux) interfaces $I_{ji}$, on peut, dans la première étape (i), adjoindre au message de contrôle qui est généré, pour chaque interface $I_{ji}$, une seconde information associée qui est représentative d'un niveau de priorité d'utilisation de cette interface de communication $I_{ji}$. Par exemple, dans le cas du second équipement E2, on peut souhaiter que la première interface $I_{21}$ soit utilisée en priorité. La seconde interface $I_{22}$ est donc moins prioritaire (elle doit donc être utilisée lorsque la première $I_{21}$ ne peut pas l'être ou bien en complément de cette dernière ($I_{21}$) lorsque la bande passante utilisable sur le premier chemin de communication $C_1$ ne suffit pas aux besoins de l'application concernée par la session de communication considérée).

Le niveau de priorité d'utilisation est relatif au sein d'un équipement donné Ej. Par exemple plus la valeur du niveau est petite plus l'interface $I_{ji}$ correspondante doit être utilisée de façon prioritaire. On considère dans ce qui suit qu'une interface $I_{ji}$ ayant un niveau de priorité d'utilisation de valeur égale à un (1) est plus prioritaire qu'une interface $I_{ji'}$ (i' ≠ i) ayant un niveau de priorité d'utilisation de valeur égale à deux (2).

Il est important de noter que le niveau de priorité d'utilisation et/ou la bande passante maximale atteignable en réception $K_{ji}$ au niveau d'une interface $I_{ji}$ d'un équipement donné Ej peuvent/peut éventuellement varier en fonction du jour et/ou de l'horaire et/ou du lieu. Par ailleurs, un équipement Ej peut éventuellement changer à tout moment l'indication de bande passante maximale atteignable en réception ($K_{ji}$) (et/ou l'indication de la bande passante moyenne) associée à une interface locale $I_{ji}$, du fait, par exemple, d'une estimation de trafic montant plus important (dans le cas où il n'y a pas de séparation entre les trafics montant et descendant).

Par exemple, chaque message de contrôle peut être conforme au protocole de transport SCTP (Stream Control Transmission Protocol). Mais, tout autre protocole de transport capable de supporter la multi-domiciliation (ou "multihoming"), et donc les multi-chemins, peut être utilisé. Par exemple, on peut modifier les messages de type INIT et ASCONF du protocole SCTP pour leur adjoindre les informations locales (la bande passante maximale atteignable en réception $K_{ji}$ ainsi qu'éventuellement le niveau de priorité d'utilisation) relatives à chaque interface $I_{ji}$. Ainsi, dans le cas d'adresses de communication de type IPv4, on peut changer la valeur du champ de taille ("length") pour la faire passer de 8 bits à 12 bits, puis adjoindre au champ dédié à la définition d'une adresse IPv4 (32 bits) soit un champ dédié à la définition de $K_{ji}$ (32 bits), soit un premier champ dédié à la définition de $K_{ji}$ (28 bits) et un second champ dédié à la définition du niveau de priorité d'utilisation (4 bits). Dans le cas d'adresses de communication de type IPv6, on peut conserver la valeur du champ de taille ("length" - égale à 20 bits) et adjoindre au champ dédié à la définition d'une adresse IPv6 (128 bits) soit un champ dédié à la définition de $K_{ji}$ (32 bits), soit un premier champ dédié à la définition de $K_{ji}$ (28 bits) et un second champ dédié à la définition du niveau de priorité d'utilisation (4 bits).

On notera que cette première étape (i) peut être mise en oeuvre au moyen de premiers dispositifs (de génération de messages de contrôle) $D1_j$ qui sont associés respectivement aux équipements $Ej$. Chaque premier dispositif $D1_j$ est donc chargé de générer des messages de contrôle.

On entend ici par "associé" aussi bien le fait de faire partie intégrante d'un équipement $Ej$ (comme illustré), que le fait d'être couplé directement ou indirectement à un équipement $Ej$. Par conséquent, un premier dispositif (de génération de messages de contrôle) $D1_j$ peut être réalisé sous la forme de modules logiciels (ou informatiques), ou bien de circuits électroniques, ou encore d'une combinaison de circuits électroniques et de modules logiciels.

Une seconde étape (ii) du premier procédé consiste à transmettre un message de contrôle, qui a été généré par un premier équipement (par exemple E1), à un second équipement (par exemple E2), afin qu'il détermine, notamment en fonction de chaque première information qu'il contient, au moins un chemin de communication $C_m$ pour transmettre des paquets de la session de communication considérée entre l'une de ses interfaces de communication $I_{2i}$ et une interface de communication $I_{1i}$ (ici $I_{11}$) du premier équipement E1 (qui a transmis le message de contrôle).

Afin de pouvoir utiliser les informations locales qui sont contenues dans les messages de contrôle décrits ci-avant, l'invention propose de mettre en oeuvre un second procédé dédié à la détermination de chemin(s) de communication de paquets d'une session de communication entre deux équipements $Ej$.

Ce second procédé comprend une étape consistant à sélectionner, en vue de permettre la transmission de paquets de la session de communication considérée, au moins l'un des chemins de communication $C_m$ qui existent entre l'une des interfaces de communication

$II_{ji}$ (ici $I_{2i}$) du second équipement $Ej$ (ici E2) et une interface de communication $I_{j'i}$ (ici $I_{11}$) du premier équipement $Ej'$ (ici E1). Cette sélection se fait en fonction au moins de la bande passante maximale atteignable en réception $K_{1i}$ (ici $K_{11}$) pour l'interface $I_{1i}$ (ici $I_{11}$) et des bandes passantes qui sont (immédiatement) utilisables sur les différents chemins de communication existants $C_m$. Pour qu'un chemin de communication $C_m$ puisse être sélectionné, il faut que la bande passante utilisable sur ce chemin de communication $C_m$ soit supérieure ou égale à la bande passante maximale atteignable en réception pour l'interface à laquelle il est relié.

On notera que, lorsque le premier équipement E1 comprend au moins deux interfaces $I_{1i}$ disposant d'adresses de communication différentes (ce qui n'est pas le cas dans l'exemple illustré) et que l'on a reçu un message de contrôle comportant des secondes informations locales (représentatives des niveaux de priorité d'utilisation associés à chacune des interfaces $I_{1i}$), on commence par sélectionner l'une de ces interfaces $I_{1i}$ pour qu'elle constitue une extrémité du chemin de communication devant être sélectionné (ici $C_1$), en fonction des niveaux de priorité d'utilisation qui leurs sont associés. A cet effet, on peut par exemple commencer par constituer une liste dans laquelle les interfaces $I_{1i}$ sont classées en fonction de leurs niveaux de priorité d'utilisation respectifs selon un ordre décroissant. Puis, on peut, par exemple, effectuer la sélection d'une interface parmi les interfaces $I_{1i}$ du premier équipement E1 qui sont associées à une bande passante maximale atteignable en réception $K_{1i}$ (fournie dans un message de contrôle précédemment reçu) qui est supérieure à la bande passante des paquets de la session de communication considérée, qui doivent être transmis par le second équipement E2 au premier équipement E1.

Par exemple, lorsque la première interface $I_{21}$ du second équipement E2 est plus prioritaire que la seconde interface $I_{22}$ de ce même second équipement E2 premier équipement E1, on sélectionne préférentiellement cette première interface $I_{21}$, et donc on va sélectionner le premier chemin de communication $C_1$ (qui couple la première interface $I_{21}$ à l'unique interface $I_{11}$) pour transmettre les paquets de la session de communication (au moins pendant quelques temps) du second équipement E2 vers le premier équipement E1, sous réserve que la bande passante utilisable sur ce premier chemin de communication C1 soit supérieure ou égale à la bande passante maximale atteignable en réception $K_{21}$ pour la première interface $I_{21}$.

On notera que, lorsque la bande passante $B_m$, qui est (effectivement) utilisable sur le chemin de communication sélectionné $C_m$ (par exemple $C_1$), est (ou devient) strictement inférieure à la bande passante maximale atteignable en réception $K_{1i}$ (ici $K_{11}$) pour l'interface $I_{1i}$ (ici $I_{11}$), on peut sélectionner au moins un autre des chemins de communication $C_m$ ($m \neq 1$, ici m = 2) qui existent entre une interface $I_{2i'}$ du second équipement E2 et l'interface $I_{11}$ du premier équipement E1. Lorsque plusieurs chemins de communication peuvent être potentiellement utilisés, la sélection de chemin(s) de communication peut, par exemple, se faire en fonction des temps $R_m$ qu'il faut pour transmettre des paquets sur ces chemins de communication $C_m$ (avec $m \neq 1$). Les paquets de la session de communication sont alors transmis du second équipement E2 vers le premier équipement E1, soit de façon répartie sur le chemin de communication initialement sélectionné $C_1$ et sur le chemin de communication nouvellement sélectionné $C_m$ ($m \neq 1$, ici $m = 2$), soit exclusivement sur le chemin de communication nouvellement sélectionné $C_m$ ($m \neq 1$, ici $m = 2$). Ces situations peuvent survenir lorsque le chemin de communication initialement sélectionné $C_1$ emprunte une portion de réseau (généralement sur l'Internet) qui est momentanément très utilisée, voire saturée.

On notera que le second procédé peut être mis en oeuvre au moyen de seconds dispositifs (de détermination de chemin(s) de communication) $D2_j$ qui sont associés respectivement aux équipements Ej. Chaque second dispositif $D2_j$ est donc chargé de déterminer un ou plusieurs chemins de communication.

Par exemple, et comme illustré non limitativement, chaque second dispositif $D2_j$ peut comporter des premiers moyens de sélection MS1 chargés de sélectionner au moins un chemin de communication $C_m$ en fonction au moins d'une bande passante maximale atteignable en réception $K_{ji}$, ainsi qu'éventuellement et préalablement en fonction de niveaux de priorité d'utilisation qui sont associés aux différents chemins de communication existants.

On entend ici par "associé" aussi bien le fait de faire partie intégrante d'un équipement Ej (comme illustré), que le fait d'être couplé directement ou indirectement à un équipement Ej. Par conséquent, un second dispositif (de détermination de chemin(s) de communication) $D2_j$ peut être réalisé sous la forme de modules logiciels (ou informatiques), ou bien de circuits électroniques, ou encore d'une combinaison de circuits électroniques et de modules logiciels.

L'invention ne se limite pas aux modes de réalisation de procédé de transmission d'informations, de procédé de détermination de chemin(s) de communication de paquets, de dispositif de génération de messages de contrôle, de dispositif de détermination de chemin(s) de communication de paquets, et d'équipements de communication, décrits ci-avant, seulement à titre d'exemple, mais elle englobe toutes les variantes que pourra envisager l'homme de l'art dans le cadre des revendications ci-après.

**Revendications**

**1.** Procédé de transmission d'informations entre deux équipements de communication (Ej) dans le cadre d'une session de communication exploitant au moins deux chemins de communication, l'un desdits équipements (Ej) ayant au moins deux interfaces de communication ($I_{ji}$) disposant d'adresses de communication différentes, et l'autre ayant au moins une interface de communication ($I_{j'i}$) disposant d'une adresse de communication, **caractérisé en ce qu'**il comprend une étape (i) consistant à générer dans l'un au moins desdits équipements de communication (Ej') un message de contrôle contenant chaque adresse de communication de chacune de ses interfaces de communication ($I_{j'i}$) associée à au moins une première information représentative d'une bande passante maximale atteignable en réception ($K_{j'i}$), et une étape (ii) consistant à transmettre ledit message de contrôle à l'autre desdits équipements de communication ($E_j$) afin qu'il détermine au moins un chemin de communication pour transmettre des paquets de ladite session de communication entre l'une de ses interfaces de communication ($I_{ji}$) et une interface de communication ($I_{j'i}$) dudit équipement de communication (Ej') ayant transmis ledit message de contrôle, en fonction au moins de ladite première information contenue dans ce message de contrôle.

**2.** Procédé selon la revendication 1, **caractérisé en ce qu'**à l'étape (i) ledit message de contrôle généré contient également, pour chaque interface de communication ($I_{j'i}$), une seconde information représentative d'un niveau de priorité d'utilisation de ladite interface de communication ($I_{j'i}$).

**3.** Procédé selon l'une des revendications 1 et 2, **caractérisé en ce que** ladite bande passante maximale atteignable en réception ($K_{j'i}$) au niveau d'une interface ($I_{j'i}$) est égale à la valeur moyenne de la bande passante qui est utilisable en réception au niveau de cette interface ($I_{j'i}$), pour ladite session de communication considérée.

**4.** Procédé selon l'une des revendications 1 à 3, **caractérisé en ce que** chaque message de contrôle est conforme au protocole de transport SCTP.

**5.** Procédé de détermination de chemin(s) de communication pour des paquets d'une session de communication exploitant au moins deux chemins de communication établis entre deux équipements de communication (Ej), un premier de ces équipements (Ej') ayant au moins une interface de communication ($I_{j'i}$) disposant d'une adresse de communication et un second de ces équipements (Ej) ayant au moins deux interfaces de communication ($I_{ji}$) disposant d'adresses de communication différentes, **caractérisé en ce qu'**il comprend une étape consistant à sélectionner au moins un chemin de communication existant entre une interface de communication ($I_{j'i}$) dudit premier équipement de communication (Ej') et une interface de communication ($I_{ji}$) dudit second équipement de communication (Ej), en fonction au moins d'une bande passante maximale atteignable en réception ($K_{j'i}$) pour cette première interface ($I_{j'i}$) et des bandes passantes utilisables sur lesdits chemins de communication existants, en vue de la transmission de paquets de ladite session de communication dudit second équipement de communication ($Ej$) vers ledit premier équipement de communication ($Ej'$).

6. Procédé selon la revendication 5, **caractérisé en ce que**, lorsque ledit premier équipement de communication ($Ej'$) comprend au moins deux interfaces de communication ($I_{j'i}$) disposant d'adresses de communication différentes, on sélectionne l'une de ces interfaces de communication ($I_{j'i}$) pour qu'elle constitue une extrémité dudit chemin de communication sélectionné, en fonction de niveaux de priorité d'utilisation qui leur sont associés.

7. Procédé selon la revendication 6, **caractérisé en ce que** l'on effectue ladite sélection parmi les interfaces de communication ($I_{j'i}$) dudit premier équipement de communication ($Ej'$) qui sont associées à une bande passante maximale atteignable en réception ($K_{j'i}$) supérieure à la bande passante des paquets à transmettre de ladite session de communication.

8. Procédé selon l'une des revendications 5 à 7, **caractérisé en ce que**, lorsque la bande passante utilisable sur ledit chemin de communication sélectionné est strictement inférieure à ladite bande passante maximale atteignable en réception pour ladite interface de communication ($I_{j'i}$) dudit premier équipement de communication ($Ej'$) qui constitue une extrémité dudit chemin de communication sélectionné, on sélectionne au moins un autre des chemins de communication existants entre une autre desdites interfaces de communication ($I_{ji'}$) dudit second équipement de communication ($Ej$) et ladite interface de communication ($I_{j'i}$) dudit premier équipement de communication ($Ej'$), de sorte que des paquets de ladite session de communication soient transmis sur chaque chemin de communication sélectionné.

9. Dispositif ($D1_j$) de génération de messages de contrôle pour une session de communication exploitant au moins deux chemins de communication établis entre deux équipements de communication ($Ej$), l'un desdits équipements ($Ej$) ayant au moins deux interfaces de communication ($I_{ji}$) disposant d'adresses de communication différentes, et l'autre ayant au moins une interface de communication ($I_{j'i}$) disposant d'une adresse de communication, **caractérisé en ce qu'**il est agencé pour générer pour l'un desdits équipements de communication ($Ej'$) un message de contrôle contenant chaque adresse de communication de chacune de ses interfaces de communication ($I_{j'i}$) associée à au moins une première information représentative d'une bande passante maximale atteignable en réception ($K_{ji}$) et destiné à l'autre desdits équipements de communication ($Ej$).

10. Dispositif selon la revendication 9, **caractérisé en ce qu'**il est agencé pour générer un message de contrôle contenant également, pour chaque interface de communication ($I_{j'i}$), une seconde information représentative d'un niveau de priorité d'utilisation de ladite interface de communication ($I_{j'i}$).

11. Dispositif selon l'une des revendications 9 et 10, **caractérisé en ce qu'**il est agencé pour introduire dans ledit message de contrôle une bande passante maximale atteignable en réception ($K_{j'i}$) au niveau d'une interface ($I_{j'i}$) égale à la valeur moyenne de la bande passante qui est utilisable en réception au niveau de cette interface ($I_{j'i}$), pour ladite session de communication considérée.

12. Dispositif selon l'une des revendications 9 à 11, **caractérisé en ce qu'**il est agencé pour générer des messages de contrôle conformes au protocole de transport SCTP.

13. Dispositif ($D2_j$) de détermination de chemin(s) de communication pour des paquets d'une session de communication exploitant au moins deux chemins de communication établis entre deux équipements de communication ($Ej$), un premier de ces équipements ($Ej'$) ayant au moins une interface de communication ($I_{j'i}$) disposant d'une adresse de communication et un second de ces équipements ($Ej$) ayant au moins deux interfaces de communication ($I_{ji}$) disposant d'adresses de communication différentes, **caractérisé en ce qu'**il comprend des premiers moyens de sélection (MS1) agencés pour sélectionner au moins un chemin de communication existant entre une interface de communication ($I_{j'i}$) dudit premier équipement de communication ($Ej'$) et une interface de communication ($I_{ji}$) dudit second équipement de communication ($Ej$), en fonction au moins d'une bande passante maximale atteignable en réception ($K_{j'i}$) pour cette première interface ($I_{j'i}$) et des bandes passantes utilisables sur lesdits chemins de communication existants, en vue de la transmission de paquets de ladite session de communication dudit second équipement de communication ($Ej$) vers ledit premier équipement de communication ($Ej'$).

14. Dispositif selon la revendication 13, **caractérisé en ce que** lesdits premiers moyens de sélection (MS1) sont en outre agencés, lorsque ledit premier équipement de communication ($Ej'$) comprend au moins deux interfaces de communication ($I_{j'i}$) disposant d'adresses de communication différentes, pour sélectionner l'une de ces interfaces de communication

$(I_{j'i'})$ pour qu'elle constitue une extrémité dudit chemin de communication sélectionné, en fonction de niveaux de priorité d'utilisation qui leurs sont associés.

**15.** Equipement de communication (Ej) comprenant au moins une interface de communication $(I_{ji})$ disposant d'une adresse de communication, **caractérisé en ce qu'**il comprend un dispositif de génération de messages de contrôle $(D1_j)$ selon l'une des revendications 9 à 12 et/ou un dispositif de détermination de chemin(s) de communication $(D2_j)$ selon l'une des revendication 13 et 14.

Figure unique

Europäisches
Patentamt

European
Patent Office

Office européen
des brevets

# RAPPORT DE RECHERCHE EUROPEENNE

Numéro de la demande

EP 10 30 6268

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/310419 A1 (BANSAL DEEPAK [US] ET AL) 18 décembre 2008 (2008-12-18) | 1,3,5,9, 11,13,15 | INV. H04L12/56 |
| Y | * alinéa [0006] - alinéa [0007] * * alinéas [0015], [0019], [0027] * * alinéa [0037] - alinéa [0056] * * figure 1 * | 2,4,6-8, 10,12,14 | |
| | ----- | | |
| Y | FORD ROKE MANOR RESEARCH C RAICIU M HANDLEY UNIVERSITY COLLEGE LONDON A: "TCP Extensions for Multipath Operation with Multiple Addresses; draft-ietf-mptcp-multiaddressed-01.txt", TCP EXTENSIONS FOR MULTIPATH OPERATION WITH MULTIPLE ADDRESSES; DRAFT-IETF-MPTCP-MULTIADDRESSED-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 12 juillet 2010 (2010-07-12), pages 1-43, XP015070034, [extrait le 2010-07-12] * abrégé * * Parties 1.1 et 3.3.6 * | 2,6,10, 14 | |
| | ----- | | |
| Y | US 7 583 677 B1 (MA QINGMING [US] ET AL) 1 septembre 2009 (2009-09-01) * colonne 1, ligne 40 - colonne 2, ligne 3 * * colonne 4, ligne 32 - ligne 43 * | 7,8 | |
| | ----- | | |
| | -/-- | | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| La Haye | 8 juillet 2011 | Clemente Lafuente, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 10 30 6268

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | YLITALO J ET AL: "Dynamic network interface selection in multihomed mobile hosts", SYSTEM SCIENCES, 2003. PROCEEDINGS OF THE 36TH ANNUAL HAWAII INTERNATI ONAL CONFERENCE ON 6-9 JAN. 2003, PISCATAWAY, NJ, USA,IEEE, 6 janvier 2003 (2003-01-06), pages 315-324, XP010626772, ISBN: 978-0-7695-1874-9 * Partie II.C * ----- | 4,12 | |
| A,D | R. Stewart: "RFC 4690 - Stream Control Transmission Protocol", , septembre 2007 (2007-09), pages 1-152, XP002648548, Extrait de l'Internet: URL:http://tools.ietf.org/html/rfc4960 [extrait le 2011-07-07] * le document en entier * * Section 6.4 * ----- | 1-15 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 8 juillet 2011 | Clemente Lafuente, G |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 30 6268

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-07-2011

| Document brevet cité au rapport de recherche | Date de publication | Membre(s) de la famille de brevet(s) | Date de publication |
|---|---|---|---|
| US 2008310419 A1 | 18-12-2008 | CN 101682549 A<br>EP 2165465 A1<br>WO 2008157036 A1 | 24-03-2010<br>24-03-2010<br>24-12-2008 |
| US 7583677 B1 | 01-09-2009 | AUCUN | |

EPO FORM P0460